# EUROPÄISCHE PATENTSCHRIFT

(11) **EP 2 066 916 B1**
(45) Veröffentlichungstag und Bekanntmachung des Hinweises auf die Patenterteilung: **25.04.2012**
(21) Anmeldenummer: 07803368.5
(22) Anmeldetag: 10.09.2007
(51) Int. Cl.: F16F 9/05

(54) **KUNSTSTOFFDECKEL FÜR NUTZFAHRZEUGLUFTFEDERN MIT EINGEPASSTEM PUFFER**
PLASTIC LID FOR COMMERCIAL VEHICLE AIR SPRINGS WITH MATCHED BUFFER
COUVERCLE EN PLASTIQUE À TAMPON EMBOÎTÉ POUR AMORTISSEURS PNEUMATIQUES DE VÉHICULES UTILITAIRES

(30) Priorität: 14.09.2006 DE 102006043957
(43) Veröffentlichungstag der Anmeldung: 10.06.2009
(73) Patentinhaber: ContiTech Luftfedersysteme GmbH, 30165 Hannover (DE); BPW Bergische Achsen Kommanditgesellschaft, 51674 Wiehl (DE)
(72) Erfinder: GAWINSKI, Hubertus, 31867 Lauenau (DE); BANK, Christoph, 31275 Lehrte (DE); KOPPLOW, Hans Werner, 51588 Nümbrecht (DE); STEINBACH, Rolf, 51643 Gummersbach (DE)
(74) Vertreter: Finger, Karsten
(86) Internationale Anmeldenummer: PCT/EP2007/059451
(87) Internationale Veröffentlichungsnummer: WO 2008/031785

(56) Entgegenhaltungen:
- DE-A1- 4 230 249
- DE-A1- 4 428 601
- DE-U1-202005 006 027

## Beschreibung

Die Erfindung betrifft eine Luftfeder für Nutzfahrzeuge mit einem Abrollkolben, einem Rollbalg und einem Deckel und einem Anschlagpuffer.

Luftfedern der genannten Art sind an sich bekannt und in vielfältigster Weise im Einsatz. Die DE 42 30 249 C2 zeigt eine derartige Luftfeder mit einem metallischen Deckel, der durch einen Bördelvorgang fest und luftdicht mit dem Balg verbunden ist. Zur Vermeidung von Beschädigungen der Bauteile bei vollständiger Einfederung der Luftfeder ist an dem Deckel ein ins Innere der Luftfeder weisender Anschlagpuffer aus Gummi angeordnet, der an einem korrespondierenden, an dem Deckel angeschweißten Zapfen angeknöpft ist. Die Anlagefläche zwischen dem Anschlagpuffer und dem Deckel ist eben.

In der DE 103 20 502 A1 ist ein ringförmiger Anschlagpuffer vorgesehen, der in einem Federtopf aus Metall angeordnet ist.

Die gezeigten Lösungen weisen metallische Luftfederdeckel auf, um die auftretenden Pufferkräfte ohne Beschädigungen des Deckels in die angrenzenden Anbauteile einleiten zu können.

Aus Gründen der Gewichtseinsparung werden für die den Luftfederbalg abdichteten Anbauteile Kolben und Deckel zunehmend auch Kunststoffe eingesetzt.

Die DE 10 2004 031 875 A1 zeigt einen zweiteiligen Luftfederdeckel, bei dem der Rollbalg zwischen einem Außendeckel und einem im Außendeckel eingerasteten Innendeckel aus Kunststoff eingeklemmt ist. Allerding ist auch hier der Anschlagpuffer an dem metallischen Außendeckel angebracht.

Sollen die Deckel vollständig aus Kunststoff ausgebildet sein, ist aus Gründen der Festigkeit zur Versteifung vorzugsweise eine Verrippung vorgesehen.

In Verbindung mit der Rippenstruktur des Deckels ist jedoch der Einsatz eines Puffers problematisch, da sowohl beim Anbringen des Puffers am Kolben als auch bei der Anbringung an der gerippten Seite des Deckels der Puffer beim wiederholten Auftreffen der Bauteile auf den Puffer dieser durch die nach innen weisenden Rippen des Deckels zerstört wird.

Eine Anordnung der Verrippung des Deckels auf der Außenseite des Deckels scheidet meist aus, da sich in den durch die Rippen gebildeten Kammern Fremdkörper oder Wasser einlagern können, was in extremen Fällen, beispielsweise Frost, zur Zerstörung des Deckels führen kann. Dies hat dazu geführt, dass die Luftfederdeckel meist aus Metall oder nur dann aus Kunststoff gebildet sind, wenn kein interner Anschlagpuffer vorgesehen ist.

Die DE 20 2005 006 027 U1 offenbart einen Luftfederkolben mit einer nach innen weisenden Verrippung auf, wobei die Rippen bis in den Kopfbereich des Kolbens gezogen sind. Bei dem dort vorgesehenen und am Kolben befestigten Anschlagpuffer ist es jedoch erforderlich, einen Pufferhalteteller vorzusehen, der einerseits den Puffer sicher abstützt und andererseits in Konsolelemente der Rippen einrastet. Dies erhöht nachteiligerweise die Teilevielfalt und Komplexität der Konstruktion.

Der Erfindung liegt die Aufgabe zugrunde, eine Luftfeder zu schaffen, die unter Vermeidung der genannten Nachteile auch bei Verwendung eines internen Anschlagpuffers einen verrippten Deckel aus Kunststoff aufweist.

Diese Aufgabe wird dadurch gelöst, dass der Deckel der Luftfeder aus Kunststoff mit einer nach innen weisenden Verrippung ausgebildet ist und der Anschlagpuffer am Deckel der Luftfeder befestigbar ist, wobei der Anschlagpuffer auf seiner dem Deckel zugeordneten Seite nutenförmige Aussparungen aufweist, die mit der Verrippung des Deckels korrespondieren und in die die Verrippung des Deckels so einsteckbar sind dass die zwischen den Rippen bzw. nutenförmigen Aussparungen befindlichen Teile des Puffers oben auf der Innenseite des Deckels aufliegen.

Diese Anordnung hat den Vorteil, dass der Deckel eine glatte Außenseite aufweist, so dass sich keine Fremdkörper oder Wasser einlagern können. Der Deckel lässt sich durch entsprechende Rippen problemlos versteifen, ohne dass die Gefahr der vorzeitigen Zerstörung des Puffers gegeben ist. Eine Zerstörung des Puffers wird vermieden, da die Rippen des Deckels unschädlich in der Nuten des Puffers liegen und die Kräfte vom Puffer durch die eben auf der Innenseite des Deckels zwischen den Rippen aufliegenden Teile des Puffers in den Deckel einleitbar sind.

Da der Puffer nicht am beweglichen Teil der Luftfeder, dem Kolben, angebracht werden muss, ist die ungefederte Masse am Fahrzeug geringer, was den Fahrkomfort verbessert.

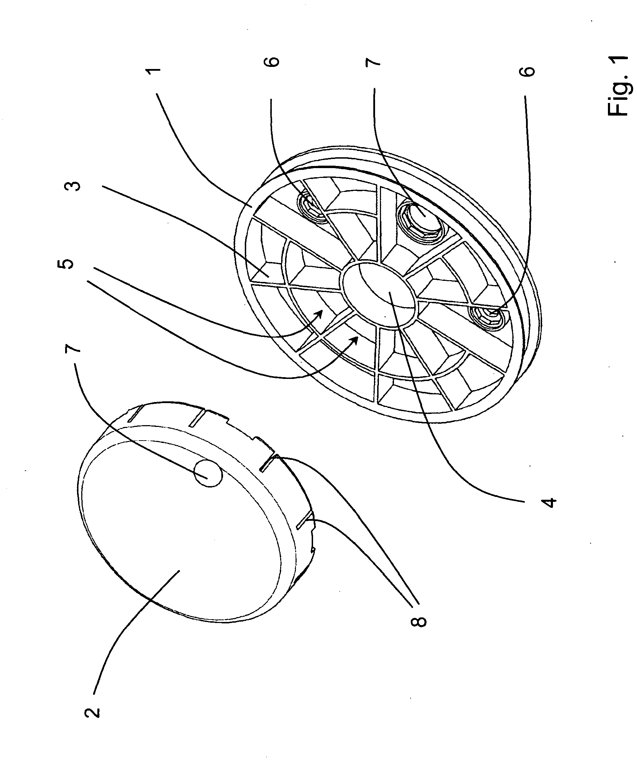

Anhand der Zeichnung wird nachstehend ein Beispiel der Erfindung näher erläutert.

Die Figur zeigt eine Explosionsdarstellung eines Luftfederdeckels 1 mit einem Anschlagpuffer 2. Der Luftfederdeckel 1 ist aus einem Kunststoffmaterial gebildet, der Puffer 2 ist aus Gummi. Der Luftfederdeckel 1 weist auf seiner dem Inneren einer nicht gezeigten Luftfeder zugewandten Seite Versteifungsrippen 3 auf, die sich axial vom Boden 4 des Deckels 1 erstrecken und Kammern 5 bilden. Im Boden 4 des Deckels 1 sind weiterhin 2 Befestigungselemente 6 und ein Luftanschluss 7 angeordnet.

Der Anschlagpuffer 2 weist auf seiner dem Deckel zugeordneten Seite nutenförmige Aussparungen 8 auf, die mit den Rippen 3 des Deckels 1 korrespondieren. Im zusammengefügten Zustand greifen die Rippen 3 des Deckels 1 in die Aussparungen 8 des Anschlagpuffers 2 ein, wobei der Anschlagpuffer 2 teilweise in die Kammern 5 hineinragt.

Der Puffer 2 ist in den Kammern 5 durch eine nicht gezeigte Verklebung mit dem Boden 4 des Deckels 1 fest verbunden und so gegen Herausfallen gesichert.

### Bezugszeichenliste

### (zur Beschreibung)

- 1: Luftfederdeckel aus Kunststoff
- 2: Anschlagpuffer
- 3: Versteifungsrippen des Luftfederdeckels 1
- 4: Boden des Deckels 1
- 5: Kammern des Luftfederdeckels zwischen den Rippen 3
- 6: Befestigungselemente
- 7: Luftanschluss
- 8: nutenförmige Aussparungen im Anschlagpuffer 8

## Patentansprüche

1. Luftfeder für Nutzfahrzeuge mit einem Abrollkolben, einem Rollbalg und einem Deckel (1) und einem Anschlagpuffer (2), **dadurch gekennzeichnet, dass** der Deckel (1) der Luftfeder aus Kunststoff mit einer nach innen weisenden Verrippung (3) ausgebildet ist und der Anschlagpuffer (2) am Deckel (1) der Luftfeder befestigbar ist, wobei der Anschlagpuffer (2) auf seiner dem Deckel (1) zugeordneten Seite nutenförmige Aussparungen (8) aufweist, die mit der Verrippung (3) des Deckels (1) korrespondieren und in die die Verrippung (3) des Deckels (1) so einsteckbar sind, dass die zwischen den Rippen bzw. nutenförmigen Aussparungen befindlichen Teile des Puffers eben auf der Innenseite des Deckels aufliegen.

## Claims

1. Air spring for commercial vehicles with a roll-off piston, a rolling bellows, a lid (1) and a stop buffer (2), **characterized in that** the lid (1) of the air spring is formed from plastic and has an inwardly-oriented ribbing (3) and the stop buffer (2) can be fastened to the lid (1) of the air spring, the stop buffer (2) having on its side oriented towards the lid (1) groove-shaped recesses (8) which correspond to the ribbing (3) of the lid (1) and into which the ribbing (3) of the lid (1) can be inserted such that the parts of the buffer that are located between the ribs and the groove-shaped recesses rest on the inside of the lid.

## Revendications

1. Ressort pneumatique pour véhicules utilitaires, comprenant un piston de déroulage, un soufflet roulant, un couvercle (1) et un tampon de butée (2), **caractérisé en ce que** le couvercle (1) du ressort pneumatique est réalisé en plastique avec un nervurage (3) orienté vers l'intérieur et le tampon de butée (2) peut être fixé sur le couvercle (1) du ressort pneumatique, le tampon de butée (2) comprenant des évidements (8) en forme de rainure sur son côté associé au couvercle (1), lesquels évidements correspondent au nervurage (3) du couvercle (1) et le nervurage (3) du couvercle (1) pouvant être enfiché dans ces évidements de telle sorte que les parties du tampon qui se situent entre les nervures ou évidements en forme de rainure reposent à plat sur le côté intérieur du couvercle.
